# EUROPÄISCHE PATENTSCHRIFT

(11) **EP 0 665 361 B1**
(45) Veröffentlichungstag und Bekanntmachung des Hinweises auf die Patenterteilung: **21.01.1998**
(21) Anmeldenummer: 94117648.9
(22) Anmeldetag: 09.11.1994
(51) Int. Cl.: E06B 9/88, H01H 19/18

(54) **Wellen-Endschalter**
Shaft limit switch
Interrupteur de fin de course d'un arbre

(30) Priorität: 28.01.1994 DE 4402524
(43) Veröffentlichungstag der Anmeldung: 02.08.1995
(73) Patentinhaber: elero GmbH, 72660 Beuren (DE)
(72) Erfinder: Beyer, Reinhard, D-72636 Frickenhausen (DE); Wolfer, Hermann, D-73252 Lenningen-Gutenberg (DE)
(74) Vertreter: Patentanwälte Westphal, Buchner, Mussgnug Neunert, Göhring

(56) Entgegenhaltungen:
- DE-A- 3 011 706
- FR-A- 2 455 349

## Beschreibung

Die Erfindung betrifft einen Wellen-Endschalter gemäß den Merkmalen des Oberbegriffs des Anspruchs 1.

Ein solcher Wellen-Endschalter ist beispielsweise aus DE 30 11 706 C2 bekannt. Der Wellen-Endschalter weist auf Rutschkupplungen angeordnete Schaltungsauslöseelemente in Form von rotierbaren Nockenrädern auf, welche mit einer Antriebswelle gekoppelt sind. Durch den Wellen-Endschalter kann die Antriebswelle an einem bestimmten Punkt ihrer Drehbewegung angehalten werden. Das Auslösen des Schaltvorganges geschieht dabei mechanisch. Hierfür sind die Nockenräder an ihrer äußeren Umfangsfläche jeweils mit Einsenkungen versehen, die bei einer bestimmten gegenseitigen Relativstellung miteinander fluchten und durch eine Schwenkbewegung einer Hebeleinrichtung einen Schaltstößel eines Schalters betätigen.

Der Wellen-Endschalter ist mit einem ersten Satz Nockenrädern zum Schalten bei der einen Drehrichtung der Welle und einem zweiten Satz Nockenrädern zum Schalten bei der anderen Drehrichtung der Welle versehen. Hierdurch kann der Wellen-Endschalter die Antriebswelle einer Jalousie in einer oberen und unteren Endlage anhalten. Zum Justieren des Wellen-Endschalters verfügt dieser über zwei Einstelldrücker, durch welche die Relativstellung der beiden Sätze von Nockenrädern festlegbar ist. Zum Einstellen der unteren Endlage wird die Jalousie nach unten gefahren und kurz vor Erreichen der beabsichtigten unteren Endlage der für das Ausschalten in diesem Drehsinn zuständige Einstelldrücker gedrückt. Der Einstelldrücker greift nach relativ kurzem Weiterdrehen der Antriebswelle auf Vorsprünge der entsprechenden Nockenräder, wodurch die Hebeleinrichtung schwenkt und den zugeordneten Schalter betätigt. Bei der Einstellung der oberen Endlage der Jalousie wird analog vorgegangen.

Im Betrieb der Jalousie greifen Schaltnasen der Hebeleinrichtung bei Erreichen der oberen oder unteren Endlage in die fluchtenden Einsenkungen der entsprechenden Nockenräder und lösen aufgrund der dabei auftretenden Schwenkbewegung der Hebeleinrichtung eine Schalterbetätigung zum Abschalten des die Welle antreibenden Motors aus. Voraussetzung hierfür ist ein sicheres Halten der Schaltnasen in den Einsenkungen der Nockenräder auch bei nachlassender Bremswirkung.

Darüber hinaus verfügt der bekannte Wellen-Endschalter über eine Auflaufschalteinrichtung. Diese Auflaufschalteinrichtung dient zur Notabschaltung bei Versagen der normalen Endschalterfunktion für die obere Endlage der Jalousie. Hierfür weist die Auflaufschalteinrichtung einen Auflaufdrücker auf, der aus dem Gehäuse des Wellen-Endschalters ragt und an seinem unteren Ende in die Bewegungsbahn einer obersten Lamelle der Jalousie reicht und von dieser angehoben wird, bevor die Jalousie unbeabsichtigt ganz an die Jalousiekopfleiste gezogen wird. Der Auflaufdrücker steht direkt mit dem Mikroschalter in Verbindung, so daß er diesen bei Anheben mit anhebt und somit einen Schaltvorgang auslöst und damit den Motor ausschaltet.

Der Schaltvorgang wird folglich auf zweierlei Arten ausgelöst. Zum einen wird der Stößel des Schalters bei Fluchten der Einsenkungen der Nockenräder über die Hebeleinrichtung betätigt und zum anderen ein Schaltvorgang mit Hilfe des Auflaufdrückers durch Anheben des Schaltergehäuses weg vom Schaltstößel bewirkt. Dies erfordert einen verhältnismäßig komplizierten Aufbau des Wellen-Endschalters, um ein sicheres Abschalten der angetriebenen Welle zu ermöglichen.

In DE 30 11 260 A1 ist eine Schaltvorrichtung für den elektrischen Antrieb von Rolläden, Rollvorhängen oder dgl. beschrieben, mit welcher bei einem Überfahren der Endstellung des elektrischen Antriebes der Motor sicher ausgeschaltet bleibt. Hierfür dient im wesentlichen ein auf einer Achse schwenkbar gelagerter Schwenkhebel, dessen beide Nasen jeweils an Nockenrädern anliegen und dessen gegenüberliegendes Steuerteil auf einen Mikroschalter drücken kann. Die beiden Nocken sitzen auf einer parallel zur Schwenkachse liegenden Welle. Die Nocken werden mit unterschiedlichen Umlaufgeschwindigkeiten angetrieben und sind jeweils mit einem Umfangsprofil versehen, auf den die beiden Nocken des Schwenkhebels laufen. Das Umfangsprofil jeder dieser Nocken besitzt eine Kerbe, deren Abmessung so groß gewählt ist, daß die entsprechende Nase am Schwenkhebel einfallen kann. Mittels einer Torsionsfeder drückt der Schwenkhebel mit seinen Nasen ständig gegen die Umlaufflächen der Nocken 11. Sobald der Endpunkt des elektrischen Antriebes erreicht ist, fallen die beiden Nasen des Schwenkhebels in die entsprechenden Profilkerben ein. Der Schalter wird geöffnet, wodurch der elektrische Antrieb ausgeschaltet wird (vgl. Seite 7, dritter Absatz).

Der Erfindung liegt die Aufgabe zugrunde, den bekannten Wellen-Endschalter so weiterzubilden, daß ein zuverlässiges Betätigen des Schalters innerhalb des Wellen-Endschalters und somit ein sicheres Abschalten der angetriebenen Welle erreicht wird. Darüber hinaus soll sich der Wellen-Endschalter durch einen möglichst kompakten und einfachen Aufbau auszeichnen.

Diese Aufgabe wird durch einen Wellen-Endschalter gemäß den Merkmalen des Patentanspruchs 1 gelöst.

Weiterbildungen der Erfindung sind Gegenstand der Unteransprüche.

Die Erfindung beruht darauf, die Hebeleinrichtung mehrteilig auszubilden und einen ersten Hebel und einen zweiten Hebel vorzusehen. Der erste Hebel und zweite Hebel stehen erfindungsgemäß miteinander derart in Wirkverbindung, daß einerseits bei Erreichen der bestimmten Relativstellung der Nockenräder der zweite Hebel durch Bewegung des ersten Hebels den Schaltstößel betätigt und andererseits der zweite Hebel unabhängig vom ersten Hebel über eine Auflaufeinrichtung zur Betätigung des Schaltstößels bewegbar ist. Der Schaltstößel des Schalters wird also ausschließlich vom zweiten Hebel betätigt, unabhängig davon, ob die Auflaufeinrichtung als Notabschalteinrichtung bei Versagen der normalen Endschalterfunktion ausgelöst wird oder die Nockenräder in der bestimmten Relativstellung fluchten und das Erreichen der Endlage anzeigen.

Als besonders einfache Realisierungsmöglichkeit der Hebeleinrichtung hat sich herausgestellt, einen ersten und einen zweiten Hebel jeweils um ein gemeinsames Achsrohr schwenkbar anzuordnen, wobei der erste und zweite Hebel jeweils voneinander wegweisende Hebelarme aufweist. Im Bereich des Achsrohres liegen der erste Hebel und der zweite Hebel für eine Druckübertragung mindestens teilweise flächig aneinander.

Eine Weiterbildung der Erfindung besteht darin, daß die Hebeleinrichtung axial zur angetriebenen Welle verschiebbar angeordnet ist. Die auf Rutschkupplungen angeordneten und mit der Welle gekoppelten Schaltungsauslöseelemente, hier Nockenräder, sind erfindungsgemäß so ausgebildet, daß bei einem Erreichen der vorgegebenen gegenseitigen Relativstellung der Nockenräder und anschließendem Weiterdrehen der Nockenräder, beispielsweise durch Nachlassen der Bremswirkung bedingt, die Hebeleinrichtung unter Beibehaltung der beim Erreichen der Relativstellung der Nockenräder erfolgten Schwenkbewegung axial verschoben wird. Hierdurch bleibt die Hebeleinrichtung geschwenkt und somit der Schaltstößel auch bei Überfahren der kurzzeitig erreichten Relativstellung betätigt. Der im Augenblick des Erreichens der Relativstellung aufgrund der Stößelbewegung abgeschaltete Motor schaltet aufgrund dieser erfindungsgemäßen Ausbildung der Nockenräder und der axialen Verschiebung der Hebeleinrichtung nicht mehr ungewollt ein.

In einer vorteilhaften Weiterbildung der Erfindung sind die Nockenräder mit zwei unterschiedlichen Radien aufweisenden und nebeneinanderliegenden, zylindrischen Umlaufflächen versehen. In der größeren zylindrischen Umlauffläche ist eine Nut oder Einsenkung ausgebildet und der Nutgrund bzw. der Grund der Einsenkung derart gewählt, daß er mindestens in etwa den gleichen Radius wie die kleinere zylindrische Umlauffläche aufweist. Darüber hinaus ist eine axiale Abschrägung von der Nut zur kleineren zylindrischen Umlauffläche hin vorgesehen. Eine Nase der Hebeleinrichtung liegt erfindungsgemäß unter Druck auf der größeren Umlauffläche des Nockenrades an und schwenkt bei Erreichen der vorbestimmten Relativstellung in die Nut. Bei Weiterdrehung des Nockenrades gleitet die Nase der Hebeleinrichtung unter gleichzeitiger axialer Verschiebung der Hebeleinrichtung entlang der Abschrägung an die kleinere zylindrische Umlauffläche des Nockenrades und kommt dort zum Aufliegen. Die Hebeleinrichtung ist dabei so ausgestaltet, daß während der axialen Verschiebung der Hebeleinrichtung der Schaltstößel des zu betätigenden Schalters in seiner eingenommenen Stellung verbleibt.

Zweckmäßigerweise ist die Hebeleinrichtung um ein Achsrohr schwenkbar angeordnet, wobei auf dem Achsrohr eine Druckfeder aufsitzt, welche sich axial einerseits an einer Wandung des Gehäuses des Wellen-Endschalters und andererseits an der Hebeleinrichtung abstützt. Durch die Druckfeder wird eine Rückführung der Hebeleinrichtung in die Ausgangsstellung erreicht, sobald nach einer erfolgten axialen Verschiebung die Drehrichtung der Welle geändert wird und die Nockenräder ihre vorbestimmte Relativstellung wieder erreichen.

In einer Weiterbildung der Erfindung ist es vorgesehen, daß die Auflaufeinrichtung einen innerhalb des Gehäuses des Wellen-Endschalters angeordneten Auflaufschieber zum Bewegen der Hebeleinrichtung und insbesondere des zweiten Hebels aufweist. Dieser Auflaufschieber ist an seiner dem Schaltstößel des Schalters abgewandten Seite mit einem Verbindungselement in Kontakt, welches durch eine im Gehäuse des Wellen-Endschalters ausgebildete Öffnung in das Gehäuse ragt und am Auflaufdrücker befestigt ist. Vorteilhaft an dieser Weiterbildung ist die Möglichkeit, den Auflaufdrücker wahlweise an das Gehäuse des Wellen-Endschalters zu befestigen oder nicht. Werden, wie erfindungsgemäß vorgesehen, ein erster Satz Nockenräder zum Schalten bei der einen Drehrichtung der Welle und ein zweiter Satz Nockenräder zum Schalten bei der anderen Drehrichtung der Welle vorgesehen und diesen Sätzen von Nockenrädern jeweils ein Auflaufschieber sowie eine Öffnung im Gehäuse des Wellen-Endschalters zugeordnet, so kann durch einfaches Befestigen, beispielsweise Aufstecken, des Auflaufdrückers auf das Gehäuse der Wellen-Endschalter für einen Linkseinbau oder Rechts einbau auf der Welle vorgesehen werden. Für einen Linkseinbau ist eine zweite Einsteckbuchse erforderlich, deren Verbindungselement spiegelbildlich zur Einsteckbuchse für Rechtseinbau angeordnet ist.

Durch Anordnung einer Codierung am Auflaufdrücker bzw. in oder an der zugehörigen Öffnung des Gehäuses des Wellen-Endschalters, kann eine eineindeutige Verbindung von Auflaufdrücker und Auflaufschieber erreicht werden. Der Auflaufdrücker kann durch die Lage von vier Fixierkegeln der Auflaufhülse nur in der eindeutig vorgegebenen Lage am Gehäuse befestigt werden, da die Gehäuseunterseite mit entsprechenden Vertiefungen versehen ist. Die für Rechts-/ Linkseinbau vorgesehenen Einsteckbuchsen sind zweckmäßigerweise von außen durch unterschiedliche Farbgebungen erkennbar.

Zum Einstellen des Wellen-Endschalters, d. h. zum Festlegen der oberen und unteren Endlage der anzutreibenden Jalousie, Rollade, Markise, Rolltor, Rollgitter, Sektionaltor, Kipptor, Schiebetor, Schwenktor oder dergleichen, ist eine Einstelleinrichtung zum Festhalten der Nockenräder vorgesehen. Diese Einrichtung besteht beispielsweise aus einem Einstellhebel zum Sammeln der Nockenräder und einem Einstellschieber zur Betätigung des Schaltstößels des Schalters.

Eine Weiterbildung der Erfindung sieht vor, daß die Hebeleinrichtung durch den Einstellschieber gleichzeitig mit dem Sammeln der Nockenräder über den Einstellhebel zum Betätigen des Schaltstößels des Schalters schwenkbar ist. Hierdurch wird ein Motorlauf erreicht, solange der Einstellschieber gedrückt bleibt.

In einer besonderen Weiterbildung der Erfindung ist ein symmetrischer bzw. spiegelbildlicher Aufbau des Wellen-Endschalters innerhalb des Gehäuses vorgesehen. Hierdurch ist es in einfacher Weise möglich, den Wellen-Endschalter sowohl für Linkseinbau als auch Rechtseinbau zu verwenden. Es muß lediglich der Auflaufdrücker in einer entsprechenden Öffnung des Gehäuses des Wellen-Endschalters fixiert und mit dem darin enthaltenen Auflaufschieber verbunden werden.

Die durch den erfindungsgemäßen Wellen-Endschalter erzielten Vorteile für ein einfacheres und sicheres Einstellen ergeben sich im wesentlichen durch die Trennung von bisher zusammengefassten Funktionen auf verschiedene Wirkelemente des Wellen-Endschalters. Dies gilt für die Einstelleinrichtung, die Hebeleinrichtung sowie die Auflaufeinrichtung. Bei der Einstelleinrichtung übernimmt ein Einstellhebel das Sammeln der Nockenräder und ein Einstellschieber die Betätigung des Schaltstößels eines Schalters, beispielsweise eines Mikroschalters. Bei der Hebeleinrichtung übernimmt ein Schalthebel die Abfrage der in den Nockenrädern ausgebildeten Nuten bzw. Einsenkungen und ein Auflaufhebel die Betätigung des Schalterstößels. Schließlich sorgt ein Verbindungselement der Auflaufeinrichtung für die Übertragung der Hubbewegung des Auflaufdrückers in das Innere des Gehäuses des Wellen-Endschalters und ein auf dem Auflaufschieber angeordneter Bolzen zum Anheben des Auflaufhebels und somit wiederum zur Stößelbetätigung.

Durch die Aufteilung der einzelnen Funktionen auf voneinander getrennte Teile und den symmetrischen Aufbau des erfindungsgemäßen Wellen-Endschalters ist es möglich, den Auflaufdrücker alternativ für Linkseinbau als auch Rechtseinbau einzusetzen. Hierbei ist anzumerken, daß beispielsweise eine Aufwärtsbewegung bei Rechtseinbau zur Abwärtsbewegung bei Linkseinbau und umgekehrt führt.

Ein wesentlicher Vorteil des erfindungsgemäßen Wellen-Endschalters liegt darin, daß bis auf den Auflaufdrücker keine über das Querschnittsprofil des Wellen-Endschalters herausragende Teile notwendig sind und zudem der Wellen-Endschalter mit einer glatten Endschalter-Unterseite versehen werden kann. Der erfindungsgemäße Wellen-Endschalter ist nahezu beliebig oft aufeinanderreihbar, um Sonderendschalter erzeugen zu können. Die bisher üblichen Adapterplatten und Zusatzteile sind hierfür nicht mehr erforderlich. Hierdurch läßt sich beispielsweise bei der Steuerung von Jalousien ein Zwischenhalt in mehreren Höhen bei einer Auf- und/oder Abbewegung realisieren. Es ist allerdings bei den Wellen-Endschaltern, vom letzten Wellen-Endschalter abgesehen, eine sich durch den jeweiligen Wellen-Endschalter hindurch erstreckende Antriebswelle erforderlich.

Durch die symmetrische Ausbildung des Wellen-Endschalters enthält dieser mehr Gleichteile, so daß bei der Fertigung des erfindungsgemäßen Wellen-Endschalters weniger Werkzeuge erforderlich sind.

Mit dem erfindungsgemäßen Wellen-Endschalter ist zudem eine einfachere Einstellung der oberen und/oder unteren Endlage möglich. So ist aufgrund der eindeutig geradlinigen Einstell-Hubbewegungen des Einstellschiebers ein geringerer Kraftaufwand erforderlich. Die Einstellung der Endpunkte der Jalousiebewegungen ist im Tippbetrieb möglich, wodurch sich eine wesentlich genauere Einstellung der oberen und unteren Endpunkte erreichen läßt. Eine Wiederholung der Einstellung zur Erreichung eines vorgegebenen Endpunktes aus Gründen der Einstellgenauigkeit ist eher unwahrscheinlich. Dies wird durch eine automatische Sammlung der Nockenräder im Einstellmodus des oberen und unteren Endpunktes der Jalousie erreicht, bis zur nächsten Richtungsumkehr der Drehbewegung der angetriebenen Welle. Es ist weiterhin eine Sicherheitssperrung des Einstellschiebers jeweils bei Erreichen des Endpunktes vorgesehen. Es muß nur geringfügig, d. h. maximal eine Umdrehung, zurückgefahren werden, um alle Nockenräder sicher zu sammeln und den neuen Endpunkt anfahren zu können.

Mit der erfindungsgemäßen Überlaufeinrichtung in Form von besonders ausgebildeten Nockenrädern und der axialen Bewegbarkeit der Hebeleinrichtung unter Beibehaltung einer einmal erfolgten Schwenkbewegung, führt ein Überfahren der in den Nockenrädern ausgebildeten Schaltnuten in den Endpunkten nicht ungewollt zu einem Wiederanlauf des Motors und damit eine Weiterbewegung der Jalousie. Damit ist der Einsatz von Getrieben mit höheren Antriebsdrehzahlen, d. h. größeren Massenträgheitsmomenten möglich. Eine nachlassende Bremswirkung führt nicht mehr zum Wiederanlauf des Motors. Wird zudem der Schalter als Öffner mit Zwangstrennung eingesetzt, läßt sich eine wesentlich größere Sicherheit gegen Kontaktverschweißung und deren Folgen erzielen.

Durch die Möglichkeit des Aufsteckens des Auflaufdrückers auf das Gehäuse läßt sich neben einer betrachtlichen Raumersparnis bei der Lagerung und Verpackung des erfindungsgemäßen Wellen-Endschalters auch eine einfachere und sichere Verpackung erreichen. Zudem können Transportschäden wirksam vermieden werden. Schließlich ist es auch möglich, den Auflaufdrücker durch Aufklippsen bzw. Aufstecken von Verlängerungsstücken in Stufen von beispielsweise 10 mm zu verlängern.

Die Erfindung und deren Arbeitsweise sowie Vorteile werden im folgenden anhand einer beispielhaft gewählten Ausführungsform im Zusammenhang mit neun Figuren näher erläutert. Es zeigen:
- Fig. 1:: ausgehend von der Motorseite eine Draufsicht auf den erfindungsgemäßen Wellen-Endschalter ohne Gehäusedeckel und ohne Einstellschieber im Augenblick der Abschaltung der Aufwärtsbewegung in der eingestellten oberen Endlage und in einer momentanen Zwischenstellung der Abwärtsbewegung,
- Fig. 2:: eine Schnittdarstellung zu Fig. 1 mit dem Auflaufdrücker in Grundstellung,
- Fig. 3:: eine Darstellung ähnlich zu Fig. 2 mit dem Auflaufdrücker in Grundstellung und einer abgeschalteten Aufwärtsbewegung sowie die Hebeleinrichtung in Überlaufstellung,
- Fig. 4:: eine Darstellung ähnlich zu Fig. 1, jedoch im Augenblick der Abschaltung der Aufwärtsbewegung durch den Auflaufdrücker sowie der Hebeleinrichtung für alternativen Linkslauf in Grundstellung,
- Fig. 5:: eine Schnittdarstellung zu Fig. 4 mit dem Auflaufdrücker in Abschaltstellung und mit den Nockenrädern der Aufwärtsbewegung in momentaner Zwischenstellung,
- Fig. 6:: eine Darstellung ähnlich zu Fig. 1, jedoch mit Einstellschiebern in momentaner Zwischenstellung der Abwärtsbewegung und mit gedrücktem Einstellschieber zum Anfahren der oberen Endlage,
- Fig. 7:: eine Darstellung ähnlich zu Fig. 2 mit dem nicht gezeigten Auflaufdrücker in Grundstellung und einem gedrückten Einstellschieber zum Anfahren der oberen Endlage,
- Fig. 8:: eine Darstellung ähnlich zu Fig. 1 mit Einstellschiebern, jedoch mit momentaner Zwischenstellung der Abwärtsbewegung sowie mit erreichter Einstellung der oberen Endlage der Aufwärtsbewegung, und
- Fig. 9:: ein Ausführungsbeispiel eines an dem erfindungsgemäßen Wellen-Endschalter aufsteckbaren Auflaufdrückers.

Die im folgenden zu beschreibenden Figuren sind lediglich als Schemazeichnungen des erfindungsgemäßen Wellen-Endschalters zu verstehen. Aus Gründen der Übersichtlichkeit wurde auf eine konsequente Darstellung von sichtbaren und unsichtbaren Kanten verzichtet. Einzelne Objekte sind oft nur mit einer Linienart dargestellt. Ihre Lage zueinander ergibt sich aus der Draufsicht und der jeweils dazugehörenden Schnittdarstellung.

In den Figuren bezeichnen, soweit nicht anders angegeben, gleiche Bezugszeichen jeweils gleiche Teile.

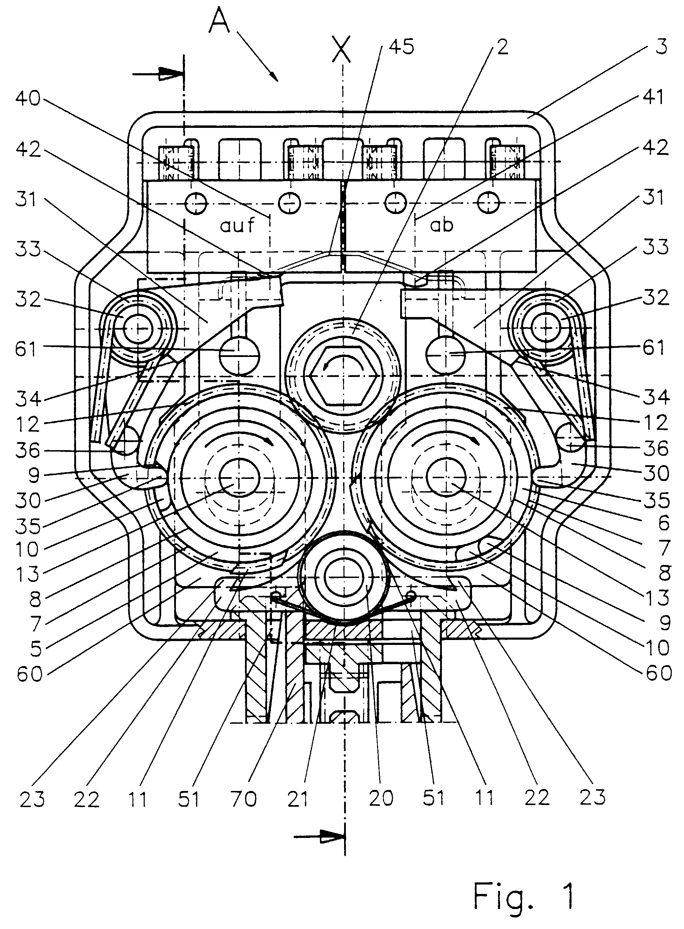

In Fig. 1 ist ein Ausführungsbeispiel eines erfindungsgemäßen Wellen-Endschalters A in Draufsicht bei geöffnetem Gehäusedeckel gezeigt. Der Betrachter sieht von der Motorseite her auf den geöffneten Wellen-Endschalter A. Der Wellen-Endschalter A kann mit seiner dem Betrachter zugewandten Stirnseite an einem Getriebe oder einem Getriebemotor befestigt werden. Der Wellen-Endschalter A weist ein Gehäuse 3 auf, das einen auf der dem Betrachter abgewandten Seite ebenen Bodendeckel aufweist. Die Seitenwandungen des Gehäuses 3 sind im wesentlichen viereckförmig ausgebildet. Das Gehäuse 3 mit Bodendeckel und Deckelteil besteht vorzugsweise aus Kunststoff.

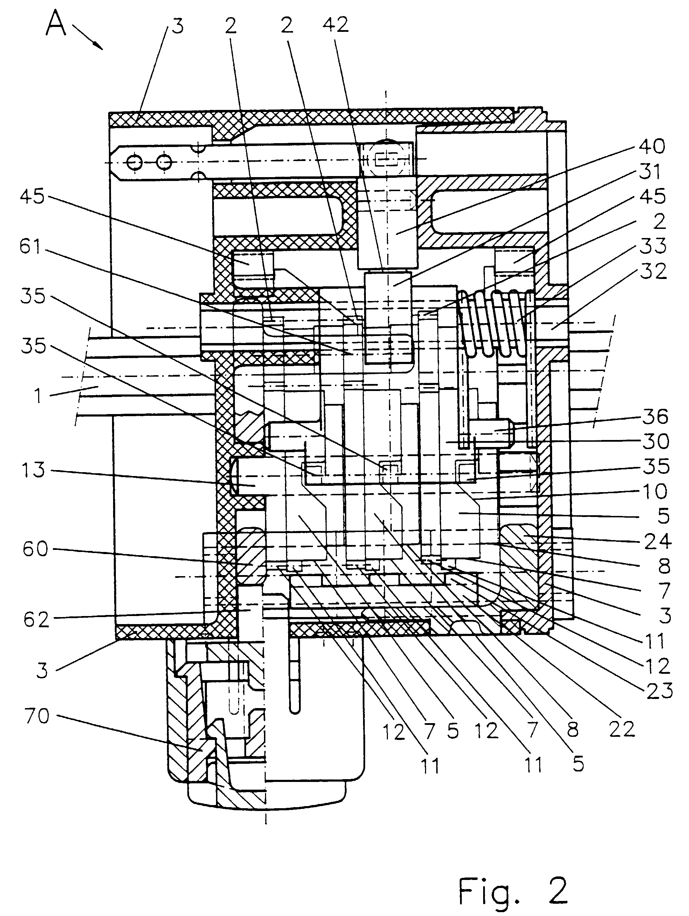

Eine Welle 1 erstreckt sich etwa zentral durch den Wellen-Endschalter A. Diese Welle 1 ist als Sechskantwelle ausgebildet und stellt beispielsweise die Abtriebswelle des vorgeschalteten Getriebes dar. Diese Welle 1 führt in der in Fig. 2 gezeigten rechten Stirnseite in den Wellen-Endschalter A hinein.

Im Gehäuse 3 des Wellen-Endschalters A sind zwei Achsrohre 13 gelagert und zwar in der Stirnansicht gemäß Fig. 1 unterhalb sowie nach rechts bzw. links gegenüber der Welle 1 versetzt. Auf jeder dieser beiden Achsrohre 13 sind Schaltungsauslöseelemente, hier zum Beispiel Nockenräder 5, 6 über Rutschkupplungen, die der Übersichtlichkeit wegen nicht dargestellt sind, drehbar gelagert. Diese Nockenräder 5, 6 weisen jeweils an ihrem äußerem Umfang Zahnkränze 12 auf, welche mit einem Zahnkranz 2, der feststehend mit dem Sechskantrohr der Welle 1 verbunden ist, in Eingriff stehen.

Wie die Darstellung von Fig. 2 erkennen läßt, sind auf der Welle 1 drei Zahnräder 2 hintereinander angeordnet, die jeweils mit einem Zahnkranz von drei hintereinander angeordneten Nockenrädern 5 in Eingriff stehen. Die Übersetzungsverhältnisse der drei Zahnräder 2 zu den jeweiligen Nockenrädern 5 betragen von links nach rechts in Fig. 2 beispielsweise 1:0,596, 1:0,609, 1:0,667. Die Übersetzungsverhältnisse zwischen dem jeweiligen Zahnrad 2 und dem jeweils zugeordneten Nockenrad 5 sind gleich den Übersetzungsverhältnissen zwischen diesen Zahnrädern 2 und den zugeordneten Nockenrädern 6.

Der erfindungsgemäße Wellen-Endschalter A gemäß Fig. 1 und 2 weist folglich einen ersten Satz Nockenräder 5 in Form von drei hintereinander angeordneten Nockenrädern 5 auf, die zum Schalten bei der in Fig. 1 gezeigten Drehrichtung entgegen dem Uhrzeigersinn der Welle 1 vorgesehen sind. Der zweite Satz Nockenräder 6 in Form von drei hintereinander angeordneten Nockenrädern 6 ist dagegen zum Schalten bei der anderen Drehrichtung der Welle 1, also im Uhrzeigersinn, vorgesehen.

Im folgenden wird davon ausgegangen, daß eine Drehung der Welle 1 entgegen dem Uhrzeigersinn zu einer Aufwärtsbewegung einer mit der Welle 1 verbundenen Jalousie und eine Drehrichtung im Uhrzeigersinn zu einer Abwärtsbewegung der Jalousie führt.

Die Nockenräder 5, 6 weisen jeweils an ihrem äußeren Umfang einen neben dem Zahnkranz 12 liegenden Nocken 11 auf. Eine noch zu erläuternde Einstelleinrichtung kann den an der äußeren Umfangsfläche des jeweiligen Nockenrades 5, 6 hervorstehenden Nocken 11 einfangen und somit das entsprechende Nockenrad anhalten. Zusätzlich verfügt jedes Nockenrad 5, 6 über eine Einkerbung bzw. Nut 9, in welche eine Schaltnase 35 einer Hebeleinrichtung 30, 31 einschwenken kann, um durch Drehung der Hebeleinrichtung 30, 31 einen Schaltstößel 42 eines zugehörenden Schalters 40, 41 zu betätigen.

Die Nut 9 jedes Nockenrades 5, 6 ist gerade so weit vom Nocken 11 entfernt angeordnet, daß beim Festhalten des Nockenrades 5, 6 die Schaltnase 35 der Hebeleinrichtung 30, 31 in die Nut 9 des Nockenrades fallen kann. Wie aus der Darstellung der Fig. 1 und 2 ersichtlich, fluchten gerade die Nuten 9 der drei nebeneinander liegenden Nockenräder 5, so daß die Hebeleinrichtung 30, 31 mit ihren drei Schaltnasen 35 in die Nuten 9 der drei Nockenräder 5 einschwenken kann. Hierdurch findet eine Schwenkbewegung der Hebeleinrichtung 30, 31 um das Achsrohr 32 statt, die das den Schaltnasen 35 gegenüberliegende Ende der als Schwenkhebel ausgebildeten Hebeleinrichtung 30, 31 nach oben bewegen läßt. Durch diese nach oben gerichtete Bewegung der Hebeleinrichtung 30, 31 wird der Schaltstößel 42 des in Fig. 1 links dargestellten Schalters 40 in Richtung zum Schalter 40 gedrückt und somit ein Abschalten des Motors, der die Jalousie nach oben bewegt, erreicht. Es wird hierdurch eine Abschaltung der Aufwärtsbewegung in der eingestellten oberen Endlage durch den in Fig. 1 dargestellten linken Satz der Nockenräder 5 erreicht. Der in Fig. 1 dargestellte zweite Satz von Nockenrädern 6 und damit die rechten Nockenräder 6 befinden sich dagegen mit der zugehörigen Hebeleinrichtung 30, 31 in einer momentanen Zwischenstellung. Die rechts dargestellte Hebeleinrichtung 30, 31 läuft mit ihren Schaltnasen 35 auf der äußeren Umfangsfläche des Nockenrades 6, so daß die Hebeleinrichtung 30, 31 keine Schwenkbewegung ausführten und somit der zugehörige Schaltstößel 42 des Schalters 41 für die Abwärtsbewegung nicht betätigt wird.

Anzumerken ist hierbei, daß der in Fig. 1 dargestellte Wellen-Endschalter A in bezug auf die zwischen den Achsrohren 13 liegende und durch die Welle 1 verlaufende Symmetrieebene X spiegelbildlich und damit symmetrisch aufgebaut ist.

Wie in Fig. 1 dargestellt, ist die Hebeleinrichtung 30, 31 um das Achsrohr 32 schwenkbar gelagert. Damit die Schaltnasen 35 der Hebeleinrichtung 30, 31 sicher in die Nuten 9 der jeweiligen Nockenräder 5, 6 einschwenken, ist eine Schenkeldruckfeder 33 auf dem Achsrohr 32 angeordnet. Diese Schenkeldruckfeder 33 stützt sich, wie in Fig. 2 gezeigt, einerseits an der rechten Wandung des Gehäuses 3 des Wellen-Endschalters A und andererseits an der Hebeleinrichtung 30, 31 ab. Ein Schenkel der Schenkeldruckfeder 33 liegt an der Wandung des Gehäuses 3 und der andere Schenkel an einem mit der Hebeleinrichtung 30, 31 im Bereich der Schaltnasen 35 angeordneten Bolzen 36. Hierdurch wird gewährleistet, daß bei Fluchten der Nuten 9 der hintereinander angeordneten Nockenräder 5 bzw. 6 die Schaltnasen 35 in die Nuten 9 gedrückt werden und somit ein sicherer Schwenkvorgang der Hebeleinrichtung 30, 31 und damit eine Betätigung des Schaltstößels 42 ermöglicht wird.

Die Hebeleinrichtung 30, 31 ist im Ausführungsbeispiel mehrteilig ausgebildet und weist einen ersten Hebel 30 und einen zweiten Hebel 31 auf. Auf dem ersten Hebel 30 ist der bereits erwähnte Bolzen 36 sowie die Schaltnase 35 angeordnet, während der zweite Hebel 31 zur Betätigung der Schaltstößels 42 vorgesehen ist. Die beiden Hebel 30, 31 sind um das Achsrohr 32 beweglich gelagert und berühren sich flächig an einer radial zum Achsrohr 13 liegenden Druckfläche 34. Hierdurch wird bei einer Schwenkbewegung des ersten Hebels 30 aufgrund des Einfallens der Schaltnasen 35 in die Nuten 9 über die Druckfläche 34 ein Schwenkvorgang des zweiten Hebels 31 bewirkt. Gelangen dagegen die Schaltnasen 35 wieder an die äußere Umfangsfläche des Nockenrades 5 (sowie es in der rechten Hälfte der Darstellung von Fig. 1 im Zusammenhang mit dem Nockenrad 6 gezeigt ist), schwenkt der erste Hebel 30 gegen die Federkraft der Druckfeder 33 zurück in Richtung Wandung des Gehäuses 3. Der zweite Hebel 31 wird sodann aufgrund der Schwerkraft sowie der Rückstellfederkraft des Schaltstößels 42 in seine Ausgangsstellung zurückbewegt und folglich bewegt sich der Schaltstößel 42 des Schalters 40 wieder nach unten.

Zum Sammeln der Nockenräder 5, 6 sind die bereits erwähnten Nocken 11 an einem vorgegebenen Ort des äußeren Umfanges des jeweiligen Nockenrades 5, 6 so angeordnet, daß die Schaltnasen 35 beim Sammeln der Nockenräder 5, 6 in die Nuten 9 einschwenken können. Zum Sammeln der Nockenräder 5, 6 ist die bereits erwähnte Einstelleinrichtung vorgesehen. Zum Einstellen der oberen und unteren Endlagen ist jeweils ein eigener Einstellschieber 24 vorgesehen, über den jeweils ein Einstellhebel 22 an den zugeordneten Satz von Nockenrädern 5, 6 so schwenkbar ist, daß die darauf befindlichen Nocken 11 festgehalten werden können. Die Einstellhebel 22 sind um ein weiteres Achsrohr 20 drehbar gelagert angeordnet und mittels einer Feder 21 in ihre Ausgangsstellung rückführbar. Wird der Einstellschieber 24 betätigt, so schwenkt der zugehörige Einstellhebel mit einer an seinem vorderen Ende angeordneten Fangnase 23 gegen die Kraft der Feder 21 in die Umlaufbahn der Nocken 11 des jeweils einzustellenden Satzes von Nockenrädern 5, 6. Hierdurch werden die Nockenräder 5, 6 eines Satzes unter Mitwirkung der Rutschkupplungen gesammelt und somit eine Betätigung des zugehörigen Schalters 40, 41 ermöglicht.

Wie in Fig. 1 zu erkennen, überlappen sich in der dargestellten Stellung der Nockenräder 5 die Nocken 11 und die Fangnasen 23 der Einstelleinrichtung. Hierdurch wird eine Sicherheitssperrung erreicht.

Die Sicherheitssperrung verhindert in dieser Stellung, daß über eine Betätigung des in Fig. 2 dargestellten Einstellschiebers 24 der Motor wieder zum Laufen gebracht wird, ohne daß die Nockenräder 5 sicher gesammelt sind. Beim Loslassen des Einstellschiebers 24 würden die Nuten 9 nicht fluchten, der erste Hebel 30 könnte mit seinen Nasen 35 nicht in die Nuten 9 einfallen und über den zweiten Hebel 31 den Stößel 42 des Schalters 40 betätigen. Der Motor würde weiterlaufen. Es muß daher geringfügig, maximal eine Umdrehung der Welle 1 zurückgefahren werden, um den Einstellhebel 22 wieder betätigen zu können.

Erreicht die Aufwärtsbewegung der Welle 1 ihre obere Endlage, wie in Fig. 1 dargestellt, so ergibt sich für die Abwärtsbewegung (vgl. Fig. 1 rechte Hälfte) des Wellen-Endschalters A eine zufällige momentane Zwischenstellung. Die Nasen 35 des ersten Hebels 30 ruhen auf der zylindrischen Lauffläche der Nockenräder 6. Da hier die Nuten 9 nur in der eingestellten unteren Endlage fluchten, können die Nasen 35 nicht in die Nuten 9 einrasten. Der Schaltstößel 42 des Schalters 41 ist daher nicht betätigt und der Schaltkontakt des Schalters 41 geschlossen. Die Stromzufuhr zum die Jalousie abwärts bewegenden Motor ist extern, z. B. über einen Auf-/Abschalter unterbrochen.

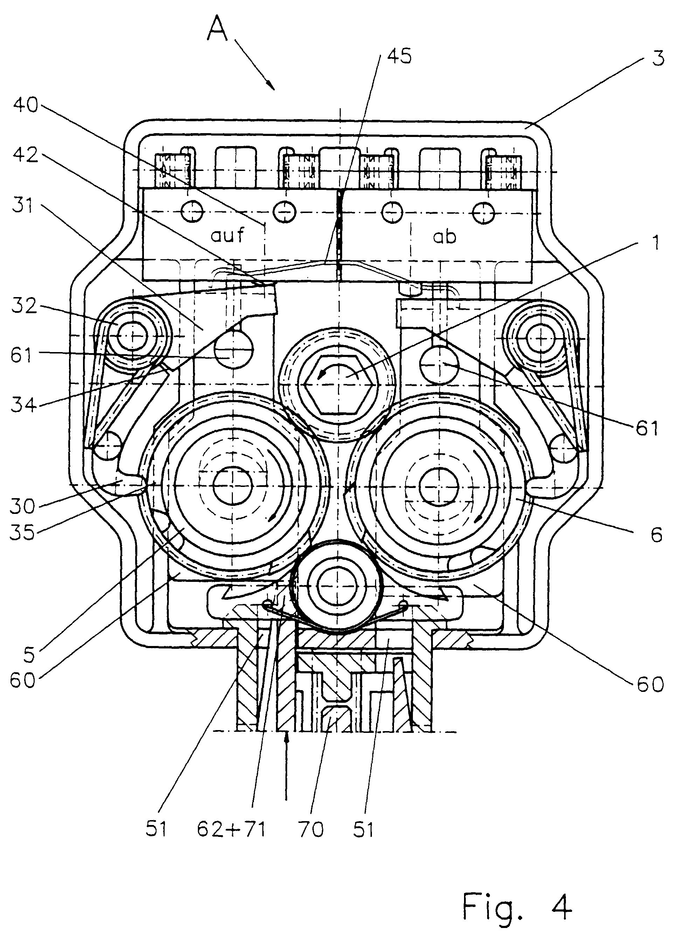

In den Fig. 1 und 2 ist auch ein Auflaufdrücker 70 (in Fig. 1 nur ausschnittsweise) dargestellt, der durch eine untere Öffnung 51 über das Verbindungselement 62 mit dem Auflaufschieber 60 verbunden ist. Der Auflaufschieber 60 erstreckt sich innerhalb des Gehäuses 3 vom Verbindungselement 62 nach oben bis etwa in Höhe des Achsrohres 32 und ist, wie in Fig. 2 deutlich ersichtlich, an der stirnseitigen Gehäusewandung anliegend angeordnet. In seinem oberen Bereich weist der Auflaufschieber 60 einen in Richtung zum zweiten Hebel 31 ragenden Auflaufbolzen 61 auf. Der Auflaufbolzen 61 ist derart beabstandet zum zweiten Hebel 31 auf dem Auflaufschieber 60 angeordnet, daß bei einer Betätigung des Auflaufdrückers 70 der zweite Hebel 31 nach oben geschwenkt und somit ein Drücken des Schaltstößels 42 ermöglicht wird. Dies wird im Zusammenhang mit Fig. 4 noch eingehend erläutert.

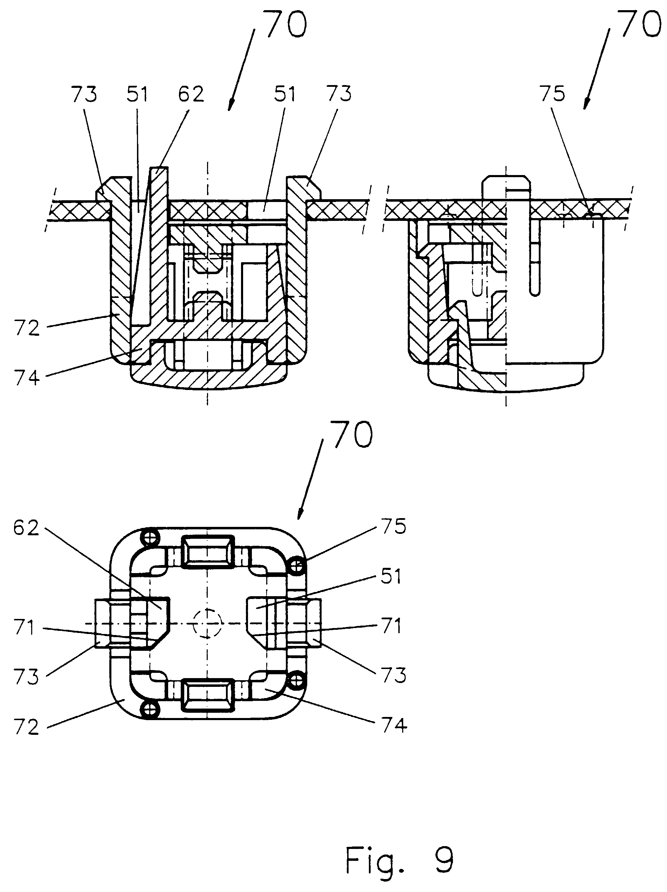

Der Auflaufschieber 60 und der Auflaufbolzen 61 ist sowohl für den ersten Satz Nockenräder 5 als auch zweiten Satz Nockenräder 6 vorgesehen. Im Gehäuse 3 des Wellen-Endschalters A ist unterhalb der Auflaufschieber jeweils eine Öffnung 51 im Gehäuse 3 angeordnet. Die Öffnung 51 für die Aufwärtsbewegung, also die linke Öffnung in Fig. 1, ist aus Codierungsgründen anders gestaltet als die in Fig. 1 rechts dargestellte Öffnung 51. Über eine geeignete Einsteckbuchse 74 mit Verbindungselement 62 ist der Auflaufdrücker 70 mit dem zugeordneten Auflaufschieber 60 verbindbar. Einzelheiten des Auflaufdrückers 70 zeigt die noch zu erläuternde Fig. 9.

Wie bereits ausgeführt, besteht die erfindungsgemäße Hebeleinrichtung 30, 31 aus dem ersten Hebel 30 mit Schaltnasen 35 und dem zweiten Hebel 31, der u. a. vom ersten Hebel 30 über seine Druckfläche 34 zum Betätigen des Schaltstößels 42 schwenkbar ist. Die erfindungsgemäße Hebeleinrichtung 30, 31 ist jedoch nicht nur um die Achse des Achsrohres 32 schwenkbar, sondern auch axial zu diesem Achsrohr 32 in Richtung Gehäusedeckel bewegbar. Der erste Hebel 30 mit seinen drei Schaltnasen 35 ist in etwa annähernd so breit wie zwei nebeneinander liegende Nockenräder 5 bzw. 6. Wichtig ist, daß die drei Schaltnasen 35 in die entsprechenden Nuten 9 der drei Nockenräder 5 bzw. 6 eingreifen können.

Die Nockenräder 5 und 6 sind erfindungsgemäß so ausgebildet, daß bei einem Erreichen der bestimmten gegenseitigen Relativstellung der Nockenräder 5 bzw. 6, in der Darstellung von Fig. 1 und Fig. 2 das Fluchten der Nuten 9, und einem anschließenden Weiterdrehen dieser Nockenräder 5 bzw. 6 die Hebeleinrichtung 30, 31 unter Beibehaltung der beim Erreichen der Relativstellung erfolgten Schwenkbewegung axial verschoben wird.

Hierfür weisen die Nockenräder 5 bzw. 6, wie in Fig. 2 am besten zu erkennen, zwei unterschiedliche Radien aufweisende und nebeneinanderliegende zylindrische Umlaufflächen 7, 8 auf. Auf diesen Umlaufflächen 7, 8 können die Schaltnasen 35 der Hebeleinrichtung 30, 31 aufliegen. Jedes Nockenrad 5, 6 ist erfindungsgemäß ausgehend von seinem Zahnkranz 12 mit einem rechts davon angeordneten Umfangsring versehen, an dem der bereits erwähnte Nocken 11 angeordnet ist. Hieran schließt sich rechts eine zylindrische Umlauffläche 7 mit einem Durchmesser, der in etwa dem Umfangsring mit dem Nocken 11 entspricht. Eine weiter rechts daneben liegende zylindrische Umlauffläche 8 weist einen geringeren Durchmesser als die Umlauffläche 7 auf. Die bereits erläuterte Nut 9 ist in der größeren zylindrischen Umlauffläche 7 ausgebildet und der Nutgrund dieser Nut 9 mindestens in etwa gleich dem Radius, den die kleinere zylindrische Umlauffläche 8 aufweist. Von der Nut 9 zur kleineren zylindrischen Umlauffläche 8 hin ist erfindungsgemäß eine axiale Abschrägung 10 vorgesehen.

Die Schaltnasen 35 der Hebeleinrichtung 30, 31 liegen zunächst vor Erreichen der Endlage auf der größeren zylindrischen Umlauffläche 7 unter Federdruck der Druckfeder 33 auf. Bei Erreichen der bestimmten Relativstellung schwenken die Schaltnasen 35 in die Nuten 9 ein, betätigen dadurch über die Hebeleinrichtung 30, 31 den Schaltstößel 42 und gleiten bei Weiterdrehung des Nockenrades 5 bzw. 6, geführt über die Abschrägung 10, unter gleichzeitiger axialer Verschiebung der Hebeleinrichtung 30, 31 an die kleinere zylindrische Umlauffläche 8 und kommen dort zu liegen.

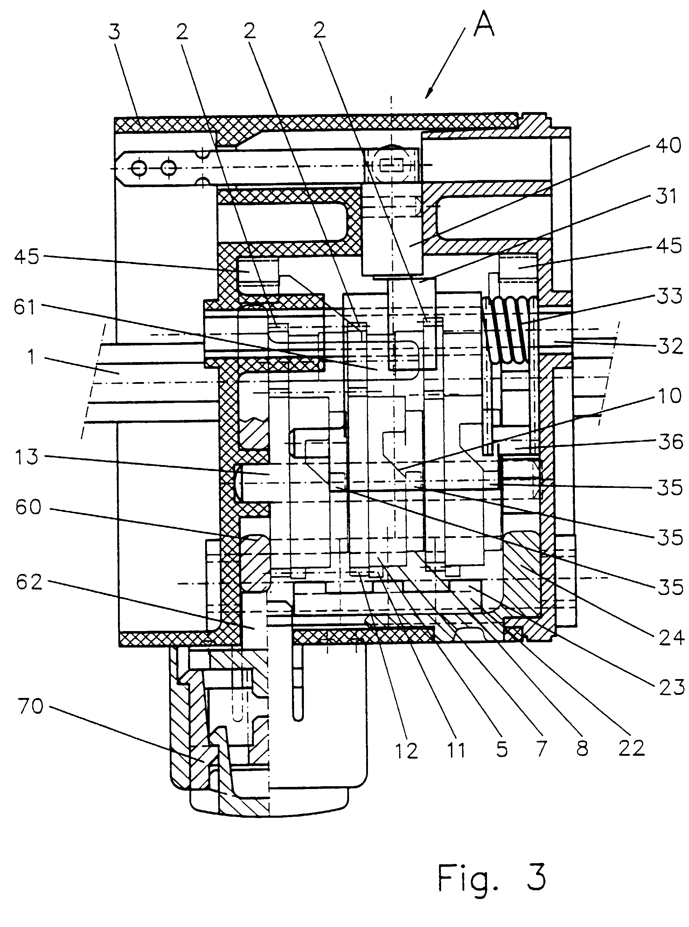

Diese axiale Verschiebung der Hebeleinrichtung 30, 31 ist in Fig. 3 dargestellt. Die Schaltnasen 35 liegen an den kleineren Umlaufflächen 8 der Nockenräder 5 auf.

Kommt der Motor beim Einfallen der Schaltnasen 35 des ersten Hebels 30 in die Nuten 9 der Nockenräder 5 nicht zum Stehen, z. B. durch eine nachlassende Bremswirkung, so wird der erste Hebel 30 durch die erfindungsgemäße Ausgestaltung der Nuten 9 über seine Schaltnasen 35 entlang der Abschrägung 10, vorzugsweise eine 45°-Schräge, in Fig. 3 nach rechts verschoben, bis die Schaltnasen 35 außerhalb der Nuten 9 auf der kleineren zylindrischen Umlauffläche 8 aufliegen. Da der Radius der kleineren zylindrischen Umlauffläche 8 in etwa gleich dem Abstand des Nutgrundes der Nuten 9 von der Achse des Achsrohres 13 der Nockenräder 5 ist, findet die Verschiebung der Hebeleinrichtung 30, 31 bei betätigtem Schaltstößel 42 und damit geöffnetem Schalter 40 statt. Der Motor steht und bleibt trotz Überfahren der Nuten 9 stehen. Die Federeinrichtung 33 in Form der Schenkeldruckfeder drückt den ersten Hebel 30 und damit dessen Schaltnasen 35 in der Darstellung von Fig. 3 nach links gegen die Kreisringfläche der entsprechenden Nockenräder 5. Der erste Hebel 30 wird durch die Federeinrichtung 33 erst wieder in die Grundstellung gebracht, wenn nach einer Richtungsumkehr der Nockenräder 5 die Nuten 9 wieder fluchten. Das Fluchten der Nuten 9 der Nockenräder 5 bzw. 6 wird also radial in den eingestellten Endlagen und axial bei Überlauf in den Endlagen genutzt.

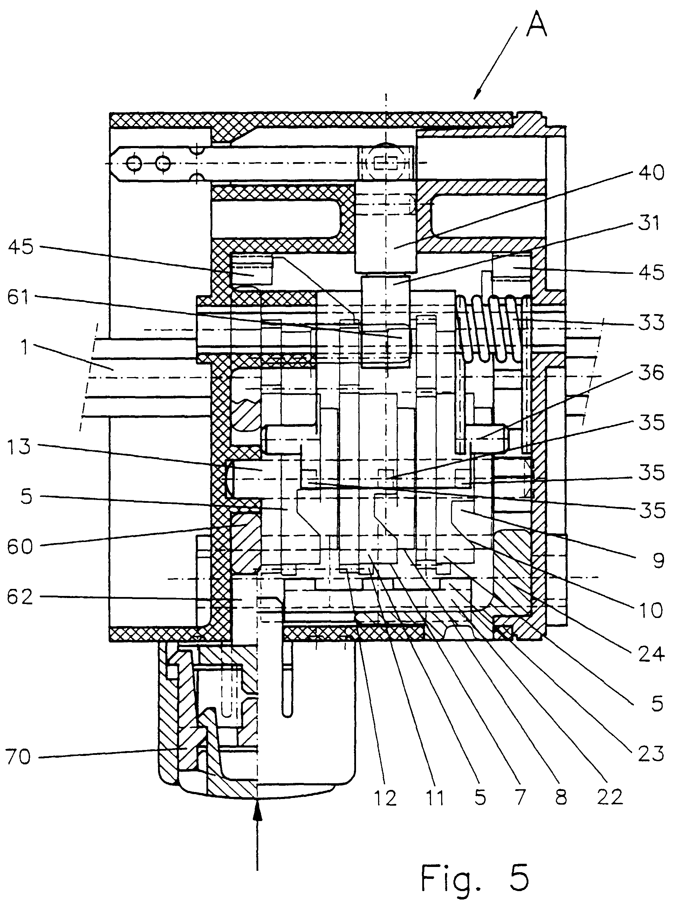

In Fig. 4 ist der geöffnete Wellen-Endschalter A im Augenblick der Abschaltung der Aufwärtsbewegung durch den Auflaufdrücker 70 dargestellt. Fig. 5 zeigt die dazugehörende Schnittdarstellung. Der Übersichtlichkeit wegen ist in Fig. 4 lediglich die Auflaufhülse des Auflaufdrückers 70 dargestellt, welche mit dem Verbindungselement 62 durch die Öffnung 51 im Gehäuse 3 geführt, mit dem Auflaufschieber 60 verbunden ist. Wie der in Fig. 4 und 5 angegebene Pfeil andeutet, ist der Auflaufdrücker 70 nach oben gedrückt. Dies ist der Fall, wenn die oberste Lamelle des sich nach oben bewegenden Jalousiepaketes den Auflaufdrücker 70 anhebt, ehe die Jalousie unbeabsichtigt ganz an die Jalousiekopfleiste gezogen wird.

Durch die auf den Auflaufdrücker 70 wirkende äußere Kraft wird der Auflaufschieber 60 ebenfalls nach oben gedrückt. Der Auflaufbolzen 61 hebt hierbei den zweiten Hebel 31 derart an, daß dessen vorderes Ende - wie im Zusammenhang mit Fig. 1 bereits erwähnt - mit seinem vorderen Teil den Stößel 42 des Schalters 40 betätigt. Der Schalter 40 öffnet. Der Motor steht. Aus der Darstellung von Fig. 4 wird deutlich, daß der zweite Hebel 31 von der Druckfläche 34 des ersten Hebels 30 durch eine scharnierartige Drehbewegung um das Achsrohr 32 nach oben schwenkt. Die außen liegenden Seiten des ersten Hebels 30 und zweiten Hebels 31 bilden normalerweise einen Winkel von 90°. Eine nach oben gerichtete Bewegung des Auflaufdrückers 70 führt jedoch zu einem Anheben des zweiten Hebels 31 über den Auflaufbolzen 61 des Auflaufschiebers 60, so daß der Winkel etwas größer als 90° wird. Bei Wegfall der durch den Auflaufdrücker 70 bewirkten äußeren Kraft sorgt die Schwerkraft sowie die Rückstellfederkraft des Schaltstößels 42 dafür, daß der zweite Hebel 31 in seine Grundstellung zurückbewegt wird und damit wieder an der Druckfläche 34 des ersten Hebels 30 anliegt.

Aus Gründen einer universellen Einsetzmöglichkeit des erfindungsgemäßen Wellen-Endschalters A für Links- und Rechtseinbau, ist im Inneren des Gehäuses 3 jeweils ein Auflaufschieber 60 dem linken Satz von Nockenrädern 5 und ein Auflaufschieber 60 dem rechten Satz von Nockenrädern 6 zugeordnet. Im Beispiel von Fig. 4 ist der Auflaufdrücker 70 über eine Einsteckbuchse und ihr Verbindungselement 62 mit dem links dargestellten Auflaufschieber 60 verbunden. Dies führt zu einer Abschaltung der Aufwärtsbewegung durch den Auflaufdrücker 70 bei Linkslauf des Motors, d. h. bei Drehung der Welle 1 entgegen der Uhrzeigerrichtung.

Soll dagegen der erfindungsgemäße Wellen-Endschalter A auf dem gegenüberliegenden Ende der Welle 1 und damit für einen Linkseinbau vorgesehen werden, müßte der Auflaufdrücker 70 mit einer Einsteckbuchse für Linkseinbau sowie deren Verbindungselement ausgestattet sein. Mit dem Bezugszeichen 71 ist eine spezielle Gestaltung der Verbindungselemente 62 der beiden Einsteckbuchsen 74 des Auflaufdrückers 70 bezeichnet. Zur Codierung wird die unterschiedliche Gestaltung der Öffnungen 51 im Gehäuse 3 des Wellen-Endschalters herangezogen. Die links dargestellte Öffnung 51 ist im Ausführungsbeispiel von Fig. 4 spiegelbildlich zu der rechts dargestellten Öffnung 51.

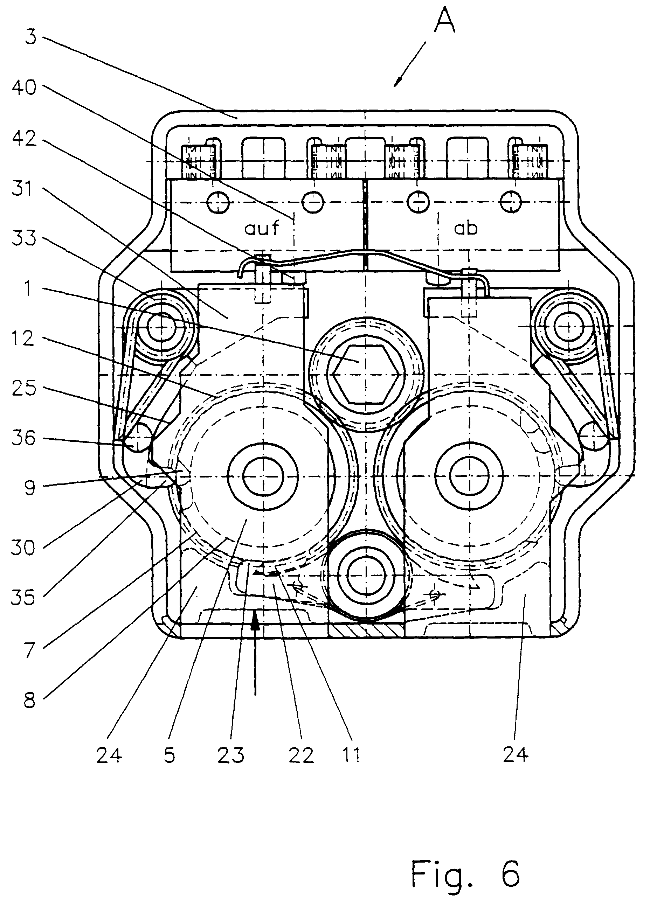

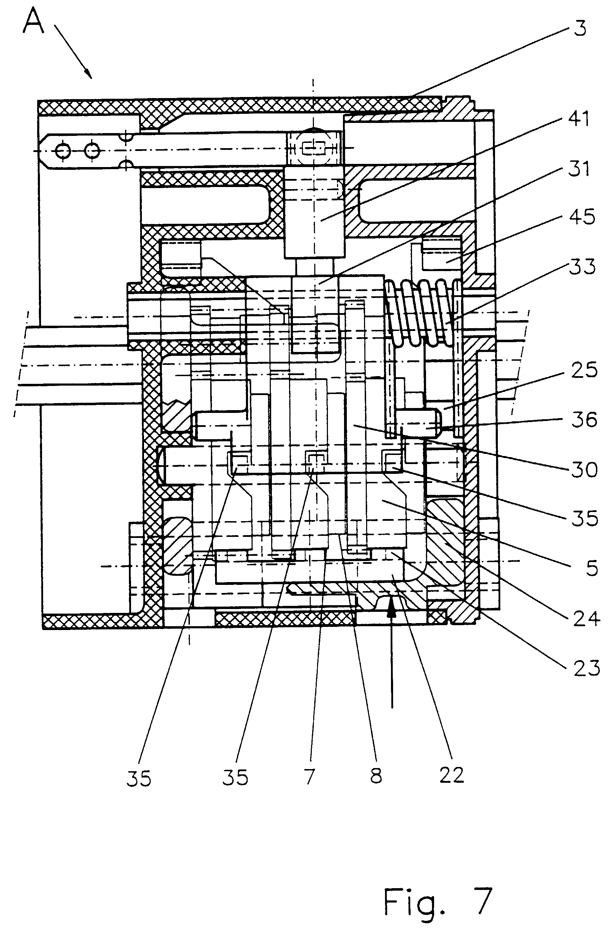

In den Fig. 6 und 7 ist der Wellen-Endschalter A bei gedrücktem Einstellschieber 24 zum Anfahren der oberen Endlage (vgl. hierzu die linke Hälfte des in Fig. 6 dargestellten Wellen-Endschalters A) und eine momentane Zwischenstellung der Abwärtsbewegung (vgl. hierzu die rechte Hälfte) dargestellt. Durch das Drücken des Einstellschiebers 24, das wieder durch einen Pfeil schematisch angedeutet ist, wird der Einstellhebel 22 nach oben bewegt. Die Fangnase 23 des Einstellhebels 22 ragt in die Umlaufbahn des Nockens 11 des Nockenrades 6. Der Einstellschieber 24 ist darüber hinaus so ausgebildet, daß er sich ähnlich wie der Auflaufschieber 60, nach oben innerhalb des Gehäuses 3 des Wellen-Endschalters A erstreckt. Der Einstellschieber 24 weist darüber hinaus eine Schaltfläche 25 auf, durch welche bei gedrücktem Einstellschieber 24 der Bolzen 36 des ersten Hebels 30 vom Nockenrad 5 weggedrückt wird.

Wird einige Umdrehungen der Welle 1 vor der einzustellenden unteren Endlage dann dieser Einstellschieber 24 gedrückt, so werden die Nocken 11 gesammelt. Als Ergebnis fluchten die Nuten 9 der Nockenräder 6 und stehen in der Position gegenüberliegend zu den Nasen 35 des ersten Hebels 30. Dieses Sammeln wird durch Rutschkupplungen ermöglicht, auf denen die Nockenräder 6 bzw. 5 sitzen.

Mit dem Drücken des Einstellschiebers 24 wird gleichzeitig mit dem Schwenken des Einstellhebels 22 zum Sammeln der Nocken 11 über die Schaltfläche 25 der erste Hebel 30 am Bolzen 36 gegen die Kraft der Druckfeder 33 nach außen gedrückt, so daß der zweite Hebel 31 den Schaltstößel 42 des Schalters 40 freigibt. Der Schalter 40 schließt. Der Motor läuft und zwar so lange, wie der Einstellschieber 24 gedrückt bleibt.

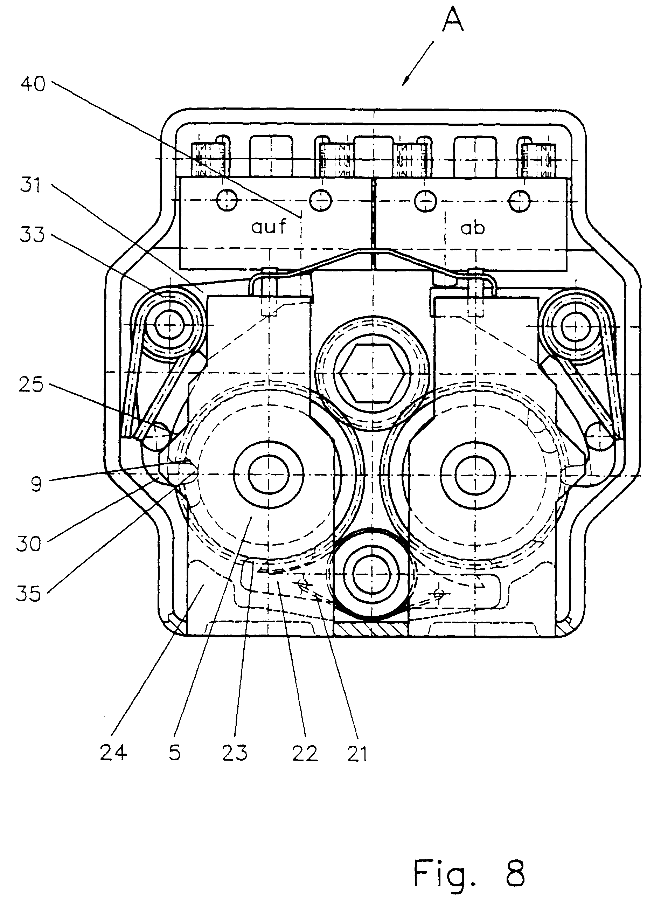

In Fig. 8 ist der erfindungsgemäße Wellen-Endschalter A ohne Auflaufdrücker zum Zeitpunkt dargestellt, wenn die Einstellung der oberen Endlage der Aufwärtsbewegung erreicht ist. Sind alle drei hintereinander angeordneten Nockenräder 5 gesammelt und wird der Einstellschieber 24 von der Einstellperson losgelassen, so bleibt der Motor stehen, weil die Schaltnasen 35 des ersten Hebels 30 in analoger Weise zur Darstellung von Fig. 1 in die fluchtenden Nuten 9 der Nockenräder 6 eingreifen und über den zweiten Hebel 31 der Schalter 40 bzw. dessen Schaltstößel 42 betätigt wird. Durch die besondere Gestaltung der Nocken 11 und der Fangnasen 23 des Einstellhebels 22, bleibt dieser in seiner oberen Stellung und sammelt die Nockenräder 5 weiter bis zur nächsten Richtungsumkehr der Welle 1. Ein erneutes Drücken des Einstellschiebers 24 läßt den Motor bei gesammelten Nockenrädern 5 wieder anlaufen. Hierdurch kann sich die Einstellperson vollständig auf das Erreichen der vorgesehenen Endlage konzentrieren, ohne erneut auf das notwendige Sammeln der Nockenräder 5 achten zu müssen. Der Einstellhebel 22 kehrt erst, unterstützt durch die wirkende Kraft der Schenkelfeder 21, in seine Grundstellung zurück, wenn mit dem Verlassen der oberen Endlage die Bewegungsrichtung der Welle 1 wieder umgekehrt wird.

Mit dem erfindungsgemäßen Wellen-Endschalter A ist somit eine Einstellung der Endlagen im Tippbetrieb möglich.

Fig. 9 zeigt ein Ausführungsbeispiel eines Auflaufdrückers 70 als vormontierte Baugruppe in zwei Schnittdarstellungen und in einer Draufsicht ohne den Gehäuseboden. Der Auflaufdrücker 70 besteht im wesentlichen aus einer Auflaufhülse 72, welche über eine Schnappverbindung 73 in die erwähnten Öffnungen 51 des Wellen-Endschalters A eingesetzt wird. Durch die Fixierkegel 75 auf der dem Gehäuseboden zugewandten Stirnseite der Auflaufhülse 72 (der Gehäuseboden ist mit entsprechenden Vertiefungen versehen) ist die Lage der Auflaufhülse 72 zum Gehäuse des Wellen-Endschalters A eindeutig vorgegeben. Der Auflaufdrücker 70 weist zur Verbindung mit dem Auflaufschieber 60 eine Einsteckbuchse 74 auf, welche in der Auflaufhülse 72 geführt und durch eine eigene Schnappverbindung gesichert wird. Bestandteil der Einsteckbuchse 74 ist das Verbindungselement 62, welches bei montiertem Auflaufdrücker 70 in das Gehäuseinnere des Wellen-Endschalters A hineinragt. Um zu gewährleisten, daß der Auflaufdrücker 70 seitenrichtig in die Öffnungen 51 des Wellen-Enschalters A eingebaut wird, sind die oben genannten Fixierkegel 75 der Auflaufhülse 72 codiert angeordnet. Zusätzlich ist in den Öffnungen 51 des Wellen-Endschalters A und der Auflaufhülse 74 durch eine spezielle Gestaltung dieser Öffnungen 51 eine Codierung 71 angeordnet. Die linke Öffnung 51 ist spiegelbildlich der rechten Öffnung 51 ausgeführt. Das Verbindungselement 62 der Einsteckbuchse 74 ist im Bereich der Öffnung 51 der speziellen Gestalt der Öffnung 51 angepaßt und läßt sich somit nur in der vorbestimmten Weise in der Auflaufhülse 72 montieren. Dargestellt ist die Einsteckbuchse 74 für Rechtseinbau. Für Linkseinbau ist eine zweite nicht dargestellte Einsteckbuchse 74 erforderlich, deren Verbindungselement 62 spiegelbildlich zur Einsteckbuchse 74 angeordnet ist. Wegen der Problematik der Richtungsumkehr der Drehbewegungen bei Rechts- oder Linkseinbau unterscheiden sich die beiden Einsteckbuchsen 74 sowie ihre Abdeckung durch eine unterschiedliche Farbgestaltung. Damit ist auch im montierten Zustand des Auflaufdrückers 70 der aktive Auflaufschieber 60 von außen erkennbar, ohne den Antrieb einschalten zu müssen. Aufwendige Einbauanleitungen in unterschiedlichen Sprachen erübrigen sich hierdurch.

### FIGURENLEGENDE

- 1: Welle
- 2: Zahnkranz
- 3: Gehäuse
- 5: Nockenrad
- 6: Nockenrad
- 7: größere zylindrische Umlauffläche
- 8: kleinere zylindrische Umlauffläche
- 9: Nut, Einsenkung
- 10: Abschrägung
- 11: Nocken
- 12: Zahnkranz
- 13: Achsrohr

- 20: Achsrohr
- 21: Federeinrichtung
- 22: Einstellhebel
- 23: Fangnase
- 24: Einstellschieber
- 25: Schaltfläche

- 30: erster Hebel
- 31: zweiter Hebel
- 32: Achsrohr
- 33: Druckfeder
- 34: Druckfläche
- 35: Schaltnase
- 36: Bolzen

- 40: erster Schalter
- 41: zweiter Schalter
- 42: Schaltstößel
- 45: Blattfeder, Federeinrichtung

- 51: Gehäuseöffnung

- 60: Auflaufschieber
- 61: Auflaufbolzen
- 62: Verbindungselement

- 70: Auflaufdrücker
- 71: Codierung
- 72: Auflaufhülse
- 73: Schnappverbindung
- 74: Einsteckbuchse
- 75: Fixierkegel

- A: Wellen-Endschalter
- X: Symmetrieebene

## Patentansprüche

1. Wellen-Endschalter mit auf Rutschkupplungen angeordneten Nockenrädern (5, 6), welche mit einer Welle (1) gekoppelt sind und die bei einer bestimmten gegenseitigen Relativstellung durch eine Schwenkbewegung einer Hebeleinrichtung (30, 31) einen Schalter (40, 41) betätigen, dadurch gekennzeichnet, daß die Hebeleinrichtung (30, 31) mehrteilig ausgebildet ist und einen ersten Hebel (30) und einen zweiten Hebel (31) aufweist, die derart miteinander in Wirkverbindung stehen, daß einerseits bei Erreichen der bestimmten Relativstellung der Nockenräder (5, 6) der zweite Hebel (31) durch Bewegung des ersten Hebels (30) einen Schaltstößel (42) des Schalters (40, 41) drückt und andererseits der zweite Hebel (31) unabhängig vom ersten Hebel (30) über einen Auflaufschieber (60) zur Betätigung des Schaltstößels (42) bewegbar ist.

2. Wellen-Endschalter nach Anspruch 1, dadurch gekennzeichnet, daß der erste Hebel (30) und der zweite Hebel (31) jeweils um ein Achsrohr (32) schwenkbar angeordnet sind, daß der erste Hebel (30) und zweite Hebel (31) jeweils voneinander wegweisende Hebelarme aufweisen und im Bereich des Achsrohres (32) für eine Druckübertragung vom ersten Hebel (30) auf den zweiten Hebel (31) mindestens teilweise flächig aneinander liegen.

3. Wellen-Endschalter nach Anspruch 1 oder 2, dadurch gekennzeichnet, daß die Hebeleinrichtung (30, 31) axial zur Welle (1) verschiebbar angeordnet ist und die Nockenräder (5, 6) so ausgebildet sind, daß bei einem Erreichen der bestimmten gegenseitigen Relativstellung, und anschließendem Überfahren durch Weiterdrehung der Nockenräder (5, 6) die Hebeleinrichtung (30, 31) unter Beibehaltung der beim Erreichen der Relativstellung erfolgten Schwenkbewegung axial verschoben wird.

4. Wellen-Endschalter nach einem der Ansprüche 1 bis 3, dadurch gekennzeichnet, daß die Nockenräder (5, 6) mit zwei unterschiedlichen Radien aufweisenden und nebeneinanderliegenden, zylindrischen Umlaufflächen (7, 8) versehen sind, daß in der größeren zylindrischen Umlauffläche (7) eine Nut (9) ausgebildet ist, daß der Nutgrund mindestens in etwa den gleichen Radius als die kleinere zylindrische Umlauffläche (8) aufweist, und daß eine axiale Abschrägung (10) ausgehend von der Nut (9) zur kleineren zylindrischen Umlauffläche (8) hin vorgesehen ist, wobei eine Nase (35) der Hebeleinrichtung (30, 31) unter Druck auf der größeren Umlauffläche (7) des Nockenrades (5, 6) an- liegt, bei Erreichen der Relativstellung in die Nut (9) schwenkt und bei Weiterdrehung des Nockenrades (5, 6) über die Abschrägung (10) axial verschoben an der kleineren zylindrischen Umlauffläche (8) zu liegen kommt.

5. Wellen-Endschalter nach Anspruch 4, dadurch gekennzeichnet, daß die Hebeleinrichtung (30, 31) um das Achsrohr (32) schwenkbar angeordnet ist, daß auf dem Achsrohr (32) eine Druckfeder (33) angeordnet ist, welche sich axial einerseits an einer Wandung des Gehäuses (3) des Wellen-Endschalters (A) und andererseits an der Hebeleinrichtung (30, 31) abstützt.

6. Wellen-Endschalter nach einem der Ansprüche 1 bis 5, dadurch gekennzeichnet, daß eine Auflaufeinrichtung vorgesehen ist, welche einen innerhalb des Gehäuses (3) des Wellen-Endschalters (A) angeordneten Auflaufschieber (60) zum Bewegen der Hebeleinrichtung (30, 31) aufweist, daß der Auflaufschieber (60) auf seiner dem Schaltstößel (42) abgewandten Seite über ein Verbindungselement (62), welches durch eine im Gehäuse (3) des Wellen- Endschalters (A) ausgebildete Öffnung (51) ragt und am Auflaufdrücker (70) befestigt ist, und daß durch die Öffnung (51) der Auflaufdrücker (70) am Gehäuse (3) befestigbar ist.

7. Wellen-Endschalter nach einem der Ansprüche 1 bis 6, dadurch gekennzeichnet, daß eine Einstelleinrichtung (20, 21, 22, 23) zum Festhalten der Nockenräder (5, 6) vorgesehen ist.

8. Wellen-Enschalter nach Anspruch 7, dadurch gekennzeichnet, daß die Einstelleinrichtung (20, 21, 22, 23, 24) einen Einstellhebel (22) zum Sammeln der Nockenräder (5, 6) und einen Einstellschieber (24) zum Betätigen des Schaltstößels (42) des Schalters (40, 41) aufweist.

9. Wellen-Endschalter nach Anspruch 8, dadurch gekennzeichnet, daß durch den Einstellschieber (24) die Hebeleinrichtung (30, 31) schwenkbar ist.

10. Wellen-Endschalter nach einem der Ansprüche 1 bis 10, dadurch gekennzeichnet, daß jeweils eine Federeinrichtung (45) zum Rückstellen der Einstellschieber (24) und der Auflaufschieber (60) vorgesehen ist.

11. Wellen-Endschalter nach einem der Ansprüche 1 bis 10, dadurch gekennzeichnet, daß ein erster Satz Nockenräder (5) zum Schalten bei der einen Drehrichtung der Welle (1) und ein zweiter Satz Nockenräder (6) zum Schalten bei der anderen Drehrichtung der Welle (1) vorgesehen sind.

12. Wellen-Endschalter nach Anspruch 11, dadurch gekennzeichnet, daß die Einstelleinrichtung (20, 21, 22, 23) zum jeweils getrennten Festhalten des ersten oder zweiten Satzes von Nockenrädern (5, 6) vorgesehen ist.

13. Wellen-Endschalter nach einem der Ansprüche 1 bis 12, gekennzeichnet durch einen symmetrischen Aufbau des Wellen-Endschalters (A) entlang einer zwischen den Nockenrädern (5, 6) liegenden, virtuellen Ebene wobei den Nockenrädern (5) zum Schalten bei der einen Drehrichtung der Welle (1) als auch den Nockenrädern (6) zum Schalten bei der anderen Drehrichtung der Welle (1) jeweils eine Auflaufeinrichtung (60) zugeordnet ist, welche über jeweils eine Öffnung (51) des Gehäuses (3) mit einem Auflaufdrücker (70) verbindbar ist.

14. Wellen-Endschalter nach Anspruch 13, dadurch gekennzeichnet, daß der Auflaufdrücker (70) und die jeweilige Öffnung (51) des Gehäuses (3) mit einer Codierung (71) versehen sind, die eine eindeutige Verbindung von Auflaufdrücker (70) und Auflaufschieber (60) über das Verbindungselement (62) ermöglicht.

15. Verwendung des Wellen-Endschalters nach einem der Ansprüche 1 bis 14 bei Rolläden, Jalousien, Markisen, Rolltoren, Rollgittern, Sektionaltoren, Kipptoren, Schiebetoren oder Schwenktoren.

## Claims

1. Shaft limit switch having cam wheels (5, 6) which are disposed on slipping clutches, which are coupled to a shaft (1) and which actuate a switch (40, 41) by a swivelling movement of a lever device (30, 31) in a certain mutual relative position, characterized in that the lever device (30, 31) is of multipart design and has a first lever (30) and a second lever (31) which are operatively linked to one another in such a way that, on the one hand, the second lever (31) presses an switching plunger (42) of the switch (40, 41) as a result of movement of the first lever (30) on reaching the certain relative position of the cam wheels (5, 6) and, on the other hand, the second lever (31) is movable independently of the first lever (30) by means of a stop slider (60) for actuating the switching plunger (42).

2. Shaft limit switch according to Claim 1, characterized in that the first lever (30) and the second lever (31) are each disposed so as to be able to swivel around an axle tube (32) and in that the first lever (30) and the second lever (31) each have lever arms pointing away from one another and, in the region of the axle tube (32), lie at least partially flatly against one another to transfer pressure from the first lever (30) to the second lever (31).

3. Shaft limit switch according to Claim 1 or 2, characterized in that the lever device (30, 31) is disposed so as to be axially displaceable with respect to the shaft (1) and the cam wheels (5, 6) are designed so that, on reaching the certain mutual relative position and then travelling over it as a result of further rotation of the cam wheels (5, 6), the lever device (30, 31) is axially displaced while retaining the swivelling movement which has taken place on reaching the relative position.

4. Shaft limit switch according to one of Claims 1 to 3, characterized in that the cam wheels (5, 6) are provided with two cylindrical circumferential surfaces (7, 8) which have different radii and are situated next to one another, in that a groove (9) is formed in the larger cylindrical circumferential surface (7), in that the base of the groove has, at least approximately, the same radius as the smaller cylindrical circumferential surface (8), and in that an axial bevel (10) is provided which proceeds from the groove (9) to the smaller cylindrical circumferential surface (8), wherein a lug (35) of the lever device (30, 31) rests under pressure against the larger circumferential surface (7) of the cam wheel (5, 6), swivels into the groove (9) on reaching the relative position and, on further rotation of the cam wheel (5, 6), comes to rest on the smaller cylindrical circumferential surface (8) being axially displaced by means of the bevel (10).

5. Shaft limit switch according to Claim 4, characterized in that the lever device (30, 31) is disposed so as to be able to swivel about the axle tube (32) and in that there is disposed on the axle tube (32) a compression spring (33) which bears axially, on the one hand, on a wall of the housing (3) of the shaft limit switch (A) and, on the other hand, on the lever device (30, 31).

6. Shaft limit switch according to one of Claims 1 to 5, characterized in that a stop device is provided which has a stop slider (60) disposed within the housing (3) of the shaft limit switch (A) for moving the lever device (30, 31), in that the stop slider (60) has, on its side remote from the switching plunger (42), a linkage element (62) which projects through an opening (51) formed in the housing (3) of the shaft limit switch (A) and is attached to the stop trigger (70), and in that the stop trigger (70) can be attached to the housing (3) through the opening (51).

7. Shaft limit switch according to one of Claims 1 to 6, characterized in that an adjustment device (20, 21, 22, 23) is provided for detaining the cam wheels (5, 6).

8. Shaft limit switch according to Claim 7, characterized in that the adjustment device (20, 21, 22, 23, 24) has an adjustment lever (22) for collecting the cam wheels (5, 6) and an adjustment slider (24) for actuating the switching plunger (42) of the switch (40, 41).

9. Shaft limit switch according to Claim 8, characterized in that the lever device (30, 31) can be swivelled by the adjustment slider (24).

10. Shaft limit switch according to one of Claims 1 to 10, characterized in that a spring device (45) is provided in each case for resetting the adjustment slider (24) and the stop slider (60).

11. Shaft limit switch according to one of Claims 1 to 10, characterized in that a first set of cam wheels (5) is provided for switching in the case of the one direction of rotation of the shaft (1) and a second set of cam wheels (6) is provided for switching in the case of the other direction of rotation of the shaft (1).

12. Shaft limit switch according to Claim 11, characterized in that the adjustment device (20, 21, 22, 23) is provided for the respectively separate detaining of the first or second set of cam wheels (5, 6).

13. Shaft limit switch according to one of Claims 1 to 12, characterized by a symmetrical structure of the shaft limit switch (A) along a virtual plane situated between the each of the cam wheels (5, 6), wherein a stop device (60) is assigned to the cam wheels (5) for switching in the case of the one direction of rotation of the shaft (1) and also to the cam wheels (6) for switching in the case of the other direction of rotation of the shaft (1), which stop device can be connected to a stop trigger (70) via an opening (51) of the housing (3) in each case.

14. Shaft limit switch according to Claim 13, characterized in that the stop trigger (70) and the respective opening (51) of the housing (3) are provided with a coding (71) which makes possible an unambiguous linkage of stop trigger (70) and stop slider (60) via the linkage element (62).

15. Use of the shaft limit switch according to one of Claims 1 to 14 in roller shutters, Venetian blinds, awnings, roller doors, roller gratings, sectional doors, up-and-over doors, sliding doors or swivelling doors.

## Revendications

1. Interrupteur de fin de course d'arbre avec des roues à cames (5, 6) disposées sur des accouplements à friction qui sont accouplées à un arbre (1) et qui lorsqu'elles occupent une position relative mutuelle déterminée actionnent un interrupteur (40, 41) par un mouvement de pivotement d'un dispositif à levier (30, 31),
caractérisé en ce que
le dispositif à levier (30, 31) est réalisé en plusieurs parties et présente un premier levier (30) et un second levier (31) qui sont en liaison opérationnelle l'un avec l'autre d'une manière telle que d'une part quand les roues à cames (56) atteignent leur position relative déterminée, le second levier (31) presse du fait du mouvement du premier levier (30) un poussoir de commande (42) de l'interrupteur (40, 41) et d'autre part le second levier (31) peut indépendamment du premier levier (30) être déplacé au moyen d'un tiroir d'arrêt (60) pour actionner le poussoir de commande (42).

2. Interrupteur de fin de course d'arbre selon la revendication 1,
caractérisé en ce que
le premier levier (30) et le second levier (31) sont respectivement disposés de façon à pouvoir pivoter autour d'un tube axial (32), en ce que le premier levier (30) et le second levier (31) présentent des bras de levier s'écartant l'un de l'autre et reposant au moins en partie à plat l'un sur l'autre dans la zone du tube axial (32) pour transmettre la pression du premier levier (30) au second levier (31).

3. Interrupteur de fin de course d'arbre selon la revendication 1,
caractérisé en ce que
le dispositif à levier (30, 31) est disposé de façon à pouvoir coulisser axialement par rapport à l'arbre (1) et les roues à cames (5, 6) sont constituées d'une manière telle que, quand est atteinte leur position relative mutuelle déterminée et quand elle est ensuite dépassée du fait que les roues à cames continuent à tourner, le dispositif à levier (30, 31) coulisse axialement (5, 6) en conservant le mouvement de pivotement qui a eu lieu quand la position relative a été atteinte.

4. Interrupteur de fin de course d'arbre selon l'une des revendications 1 à 3,
caractérisé en ce que
les roues à cames (5, 6) sont pourvues de surfaces de roulement cylindriques (7, 8) qui présentent des rayons différents et se trouvent côte à côte, en ce que l'on constitue dans la surface de roulement (7) cylindrique plus grande, une rainure (9), en ce que le fond de la rainure présente au moins à peu près le même rayon que la surface de roulement (8) cylindrique plus petite et en ce que l'on prévoit un chanfrein axial (10) partant de la rainure (9) en direction de la surface de roulement cylindrique plus petite (8), un nez (35) du dispositif à levier (30, 31) reposant sous pression sur la surface de roulement plus grande (7) de la roue à cames (5, 6) pivotant dans la rainure (9) quand la position relative est atteinte et venant à reposer sur la surface de roulement cylindrique plus petite (8) lorsque la roue à cames (5, 6) continue à tourner en étant poussée axialement sur le chanfrein (10).

5. Interrupteur de fin de course d'arbre selon la revendication 4,
caractérisé en ce que
le dispositif à levier (30, 31) est disposé de façon à pouvoir pivoter autour du tube axial (32) et en ce qu'un ressort de compression (33) est disposé sur le tube axial (32) ressort de compression qui prend appui axialement d'une part sur une paroi du boîtier (3) de l'interrupteur de fin de course d'arbre (A) et d'autre part sur le dispositif à levier (30, 31).

6. Interrupteur de fin de course d'arbres selon l'une des revendication 1 à 5,
caractérisé en ce que
l'on prévoit un dispositif d'arrêt qui présente un tiroir d'arrêt (60) servant à faire bouger le dispositif à levier (30, 31) qui est disposé à l'intérieur du boîtier (3) de l'interrupteur de fin de course (A) d'arbre, en ce que le tiroir d'arrêt (60) est fixé sur son côté situé à l'opposé du poussoir de commande (42) au moyen d'un élément de liaison (62) qui pénètre à travers une ouverture (51) formée dans le boîtier (3) de l'interrupteur de fin de course d'arbre (A) et sur le poussoir d'arrêt (70) et en ce que le poussoir d'arrêt (70) peut être fixé sur le boîtier (3) à travers l'ouverture (51).

7. Interrupteur de fin de course d'arbres selon l'une des revendication 1 à 6,
caractérisé en ce que
l'on prévoit un dispositif de réglage (20, 21, 22, 23, 24) pour bloquer les roues à cames (5, 6).

8. Interrupteur de fin de course d'arbre selon la revendication 7,
caractérisé en ce que
le dispositif de réglage (20, 21, 22, 23, 24) présente un levier de réglage (22) qui sert à assembler les roues à cames (5, 6) et qui présente un tiroir de réglage (24) qui sert à actionner le poussoir de commande (42) de l'interrupteur (40, 41).

9. Interrupteur de fin de course d'arbre selon la revendication 8,
caractérisé en ce qu'
on peut faire pivoter le dispositif à levier (30, 31) par le tiroir de réglage (24).

10. Interrupteur de fin de course d'arbres selon l'une des revendication 1 à 9,
caractérisé en ce que
l'on prévoit respectivement un dispositif à ressort (45) pour ramener le tiroir de réglage (24) et le tiroir d'arrêt (60).

11. Interrupteur de fin de course d'arbres selon l'une des revendication 1 à 10,
caractérisé en ce que
l'on prévoit un premier jeu de roues à cames (5) à commander quand l'arbre (1) tourne dans un sens de rotation et un second jeu de roues à cames (6) à commander quand l'arbre (1) tourne dans l'autre sens de rotation.

12. Interrupteur de fin de course d'arbres selon la revendication 11
caractérisé en ce que
le dispositif de réglage (20, 21, 22, 23) est prévu pour maintenir respectivement de façon séparée le premier jeu ou le deuxième jeu de roues à cames (5, 6).

13. Interrupteur de fin de course d'arbres selon l'une des revendication 1 à 12,
caractérisé par
une construction symétrique de l'interrupteur de fin de course d'arbre (A) le long d'un plan virtuel, qui se trouve entre les roues à cames (5, 6), un dispositif d'arrêt (60) étant associé aux roues à cames (5) pour leur commander lors de la rotation de l'arbre (1) dans un sens connu aussi aux roues à cames (6), pour leur commander lors de la rotation de l'arbre (1) dans l'autre sens, dispositif d'arrêt (60) qui peut être relié au moyen respectivement d'une ouverture (51) du boîtier (3) à un poussoir d'arrêt (70).

14. Interrupteur de fin de course d'arbres selon la revendication 13,
caractérisé en ce que
le poussoir d'arrêt (70) et l'ouverture correspondante (51) du boîtier (3) sont pourvus d'un codage (71) qui permet d'avoir une liaison univoque du poussoir d'arrêt (70) et du tiroir d'arrêt (60) au moyen de l'élément de liaison (62).

15. Utilisation de l'interrupteur de fin de course d'arbre selon l'une des revendications 1 à 14 dans le cas de volets roulants, de stores, de jalousies, de portes roulantes, de grilles roulantes, de porte à plusieurs sections, de portes basculantes, de portes coulissantes ou de portes pivotantes.
